# EUROPEAN PATENT APPLICATION

(11) **EP 0 555 474 A1**
(43) Date of publication of application: **18.08.1993**
(21) Application number: 91914303.2
(22) Date of filing: 26.07.1991
(51) Int. Cl.: B01D 47/05, B01D 47/10, B01D 47/06

(54) **METHOD AND DEVICE FOR CLEANING GAS STREAM**

(71) Applicant: SOVMESTNOE SOVETSKO-KANADSKOE PREDPRIYATIE " COMPOMET CANTEC", Moscow, 117947 (SU)
(72) Inventor: BOCHKAREV, Anatoly Alexandrovich, Novosibirsk, 630060 (SU); GOLUBEV, Yuri Alexandrovich, Moscow, 119021 (SU); ZOLOTAREV, Sergei Nikolaevich, Moscow, 125195 (SU)
(74) Representative: Gold, Tibor Z.
(86) International application number: SU9100155
(87) International publication number: WO9302770

(57) **Abstract**

Process and apparatus for cleaning a gas stream by enlarging and collecting dust particles through vapour nucleation and inertial condensation on a cooler. Novelties of the process are the following: the oversaturation of the stream in some stages fulfilled by steam jets, directed on the cooler under certain angle. The degree of oversaturation increases from stage to stage, and in each stage those particles are removed, which are the largest on this stage. Differentiation in nucleation permits a selectivity in collection of particles.

## Description

### Industrial Field

The invention relates to the technique of separating minute particles of matter from gas streams and has specific reference to methods and apparatus utilizing same.

### Background of the Invention

Known in the art are methods for cleaning a gas stream the essence whereof consists in enlarging minute particles of matter due to nucleation in a dust-laden gas stream supersaturated by water vapour so that the droplets formed around the particles can be settled by being exposed to a variety of forces. However, the process involved in this case is an intricate one and influenced by a number of factors which, if misjudged may render it ineffective.

In the first place, to bring about the nucleation enlargement of minute particles of a given size X, the supersaturation of vapour in the gas stream must attain a level decided by Kelvin-Thomson's law. Only then the nucleation of vapour on the particles measuring X and larger is possible. The smaller particles do not grow in size at this level of supersaturation and are therefore lost.

In the second place, a specified level of supersaturation cannot be attained instantaneously in the particle-contaminated gas stream. Supersaturation cannot take place before the stream injected into the gas stream intermixes with the gas and a thermal equilibrium is established in the gas/steam mixture. When the steam starts to condense around the larger particles of dust due to the attained level of supersaturation being adequate to that end, the partial preassure of steam decreases with the result that heat is liberated which rises the average temperature of the gas/steam mixture, setting thus a limit to the attainable level of supersaturation. This means that minute particles of dust cannot be removed from the gas stream.

In the third place, the rate of particle growth varies with particle size even when the supersaturation level is adequate for stimulating the enlargement of both large and small particles, whereby the former grow in a size at a faster rate compared with the latter. Since the current level of supersaturation is different according to Kelvin-Thomson's law for particles of different size, the smaller particles dry up while the larger ones grow further in size as the thermal stabilization of the gas/steam mixture containing particles enlarged by nucleation goes on.

In the fourth place, the settling rate of nucleation-enlarged particles greatly varies with their size. The larger-sized droplets formed around particles respond to inertial forces and gravity and lend themselves to settlement without difficulty. The smaller-sized particles soar in the gas/steam stream, being suspended therein, and cannot be settled quickly and simply.

Most of the known methods neglect at least some of the above particulars and lack therefore maximum efficiency. By way of example, known in the art is a method of cleaning a gas stream pursuant whereto a dust-laden gas stream or one with a high smoke content is successively saturated stagewise a number of times with a vapour of liquid, the particles enlarged due to nucleation are settled stagewise in a cooling zone in the form of condensate which is disposed of and also known is an apparatus materializing this method which incorporates a tubular vessel with an inlet opening admitted wherethrough is the dust-laden gas or one with a high smoke content and contains a plurality of serially arranged condensation sections each whereof is provided with an injector for feeding steam, a cooler, a convergent cone with a filter disposed in the throat and an annular drain line for the condensate; the vessel has also an outlet escaping wherethrough is filtered gas (US, 3, 395, 510, 1968).

Disadvantages inherent in the known method are attributed to the above particulars. Firstly, an ordinary way of injecting steam into the particle-contaminated gas stream brings about supersaturation only after the steam has intermixed with the gas and a thermal stabilization has been established between the steam and gas. But this is a comparatively slow process. Secondly, the cooling of the gas/steam mixture in the cooling means takes place through the agency of heat transmission due to conduction and convection with the result that the level of supersaturation increases at a slow rate. This all signifies that the building up of supersaturation is a durable process in the known method so that an early nucleation around the larger particles is an obstacle for a further increase in the level of supersaturation which is conducive to an enlargement of smaller particles.

Another disadvantage of the known method is that the gas/steam mixture cools down in the cooling zone, some of the steam condenses in the cooler so that the level of supersaturation of the mixture decreases to that of the liquid above the flat surface thereof. The droplets of steam condensate formed around the particles disposed in a zone at a temperature higher than that of the gas stream begin to dry up. The filters passing wherethrough is the gas stream after the cooler will remove only those particles which have been short of time for drying up. This disadvantage cannot be eliminated by repeating all operations in the successive sections, for the level of supersaturation which can be attained is limited by the temperature of the cooler. This means that the gas stream can be cleaned from particles of a given size and coarser ones.

### Summary of the Invention

The principal object of the present invention is to provide a method and apparatus which would ensure an effective cleaning of dust-laden gas streams and those with a high smoke content under the conditions of selective capture of the contaminations. The object of the invention is to increase the efficiency of the gas cleaning process.

This object is realized in effecting a method of cleaning a gas stream by saturating the dust-laden gas stream or one with a high smoke content with vapour of a liquid in a plurality of serially arranged stages, setting at each stage the particles enlarged due to nucleation in a cooling zone so that condensate is formed and disposing of the condensate whereby the steam is injected at each stage according to the invention in the form of divergent jets making each an angle with the axis of the gas stream.

This mode of implementing the method provides for an effective removal of very small particles from the gas. The injected jets of steam bring about a high level of supersaturation of the gas/steam mixture which is conducive to nucleation enlargement of these particles. Furthermore, the divergent steam jets impart cooling zone-oriented motion to the enlarged particles in the gas so that they impinge on the surface of cooler due to inertia.

It is expedient that the divergent jets of steam injected at each stage make an angle of 45% ±10% with the axis of the gas stream. In other words the optimum angle is 35-55°. A smaller angle of inclination (35-0°) increases the velocity of the stream but impairs the inertia-induced motion of the enlarged particles towards the cooling zone. A greater angle of inclination (55-90°) intensifies the heat effect of the steam on the cooler but also in-tensifies the progress of enlarged particles into thecooling zone.

It is also expedient that the gas stream directed by the jets of steam into the cooling zone is imparted a swirling motion due to helically corrugated walls of the cooler. This facilitates the inertia-induced settling of the particles at the walls of the cooler.

It is further expedient that the level of supersaturation of the gas/steam mixture at each succeeding stages differs from that at the preceding one. This depends on the prevailing size of particles at a given stage. It is preferred to increase the content of steam in the gas/steam mixture as the size of the particles remaining in the gas diminishes. This step adds to the efficiency in capturing very small particles.

It is also preferred to increase the pressure of steam by 10-30% at each succeeding stage compared with the preceding one. The amount by which the steam pressure is to be increased varies with the ratio of the size of the particles captured at a preceding stage to that of the particles to be retained at a given stage. Owing to this approach, the particles can be separated in fractions by size, whereby the bulk of coarser particles is captured at the preceding stages and the finer particles are removed at the succeeding ones. The cleaning efficiency is thus increased and on overall saving of power is achieved.

In effecting the method, it is practical to reduce the pressure of the gas stream in the zone of steam injection at each stage and increase the gas pressure subsequently. A decrease in temperature resulting from the decrease in gas pressure is conducive to attaining a high level of supersaturation of the gas/steam mixture and, consequently, to a further increase in the efficiency of gas cleaning despite the heat liberated during the condensation-induced particle growth.

It is also practical to change the preassure of the gas stream adiabatically during the injection of steam.

It is recommended to increase the velocity of the gas stream when the pressure thereof is reduced and to reduce this velocity with an increase in the gas pressure.

This simplifies the implementation of the method.

It is advisable to dispose of the condensate at each stage separately. This creates the prospect of utilizing separately the captured particles which differ in size, physical and/or chemical properties.

The object of the invention is also realized by an apparatus for cleaning a gas stream comprising a tubular vessel, with an inlet opening admitted wherethrough is the dust-laden gas stream or one with a high smoke content, contained wherein is a plurality of serially-arranged nucleation sections each whereof is provided with a convergent cone, a means of injecting steam, a cooler and an annular collecting chamber for condensate and an outlet opening escaping wherethrough is filtered gas stream, wherein, according to the invention, the means of injecting steam in each section consists of a spraying head issuing jets of steam which form a cone and are directed towards the cooler provided in the form of a jacket disposed in a coaxial position in relation to the vessel.

The spraying head used to inject steam into the gas stream is fitted at the outlet from the convergent cone and functions therefore as an ejector capable of creating a sucking action to accelerate the gas stream.

The spraying head can be provided in the form of a multi-spray atomizer.

This structural arrangement of the apparatus creates conditions for a further improvement in the efficiency of capturing the particles. The steam issuing from the spraying head brings about a sucking action increasing the velocity of the gas stream. The divergent jets of steam increase the level of supersaturation of the gas/steam mixture with the result that the condensation enlargement of the particles is stimulated. The minute particles suspended in the gas gain velocity to a point when this exceeds the velocity of gas next to the surface of the cooler and are settled thereat due to inertia.

The apparatus may incorporate at least one section provided with an additional spraying head injecting steam in a counter-current flow in relation to the gas stream. The additional spraying head is of the same design as the principal spraying head and is disposed downstream thereof. The additional spraying head facilitates the settlement of particles at the cooler surface, ensuring high cleaning efficiency of the apparatus.

The cooler can be provided in the form cylindrical water jacket with a smooth inside surface. The construction and operation of the apparatus is simplified in this case.

Alternatively, the inside surface of the cooler can be a corrugated one. The area of contact with the gas is increased and the mass transfer improved in this case. Helical corrugations imparting a swirling motion to the gas stream which facilitates the inertia-induced settlement of the particles at the cooler wall is a desirable feature.

The annular collecting chamber of each section can discharge the condensate into a separate passage, and the passage from at least two stages can be connected to a self-contained condensate-collecting tank. A selective capture of the contaminations contained in the gas is thus possible.

It is good practice to employ the modular principle of design for the nucleation sections, the sections being joined to each other with the aid of flanges. This simplifies the fabrication and maintance of the apparatus.

The method and apparatus for cleaning a gas stream according to the prasent invention provide thus for an effective cleaning of dust-laden gas streams and those with a high smoke content, whereby particles of both small and large size and with different properties are captured selectively.

### Brief Description of the Drawings

Figure 1 is a schematic sectional elevation of the apparatus for cleaning a gas stream;
Figure 2 is a sectional elevation of a modular section of the apparatus the cooler whereof is provided with a helically corrugated wall;
Figure 3 is a schematic sectional elevation of the apparatus for cleaning a gas stream in an alternative form.

### Preferred Embodiment of the Invention

The way in which the method is embodied and the apparatus designed is explained by way of example in what follows with reference to the accompanying drawings.

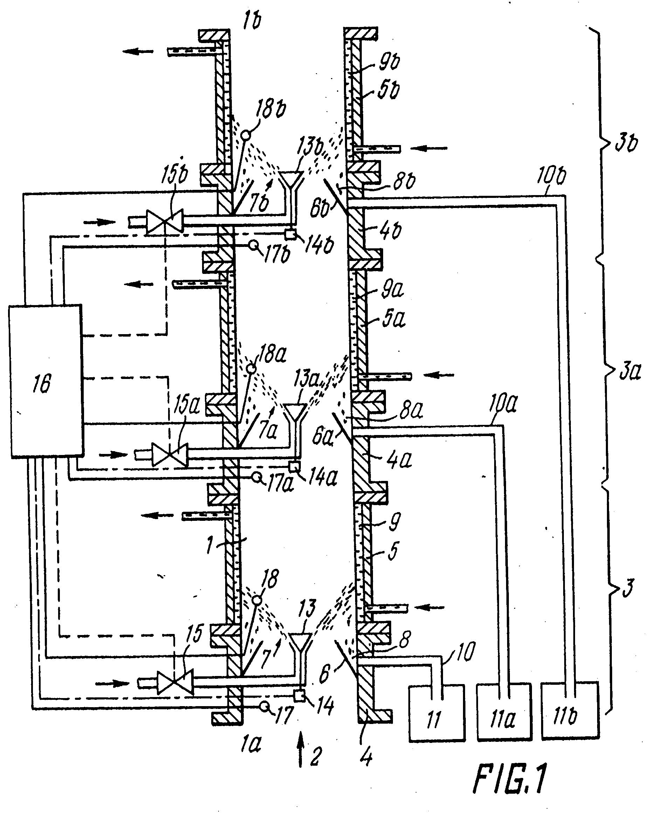

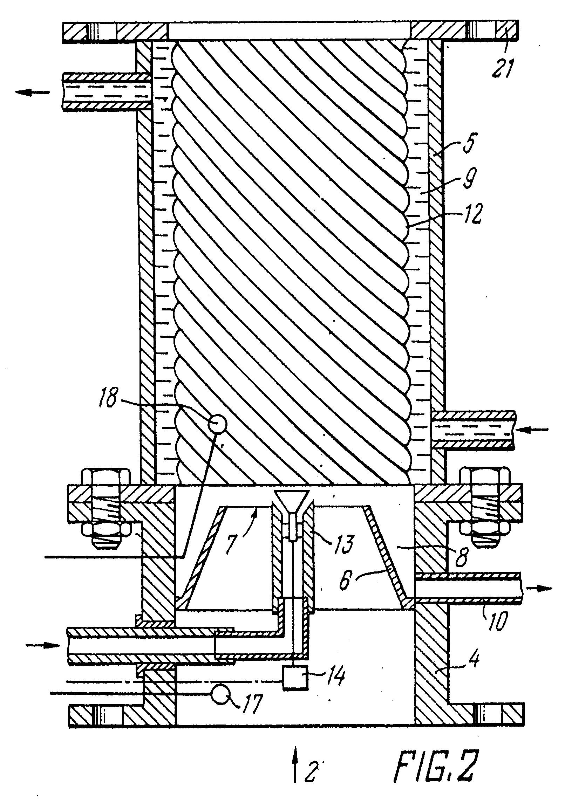

As it can be seen from Figs 1 and 2, the apparatus for cleaning a gas stream comprises a tubular vessel 1 having an inlet opening 1A and an outlet opening 1B and forming a vertical duct moving wherethrough is a stream 2 of a dust-laden gas or one with a high smoke content. The tubular vessel 1 is made up of a plurality of sections 3 of modular design as shown in Fig. 2. The number of sections comprising the apparatus for cleaning a gas stream depends on the specified separation efficiency, the properties of minute particles and their sizing in the course of capturing from the gas stream 2.

Referring to Fig.2, each section 3 has a supporting part 4 and a cooling part 5. A convergent cone 6 with a throat having a central opening 7 which functions as a venturi tube is disposed in the supporting part 4 of the section 3.The convergent cone 6 serves also as an inside wall of an annular collecting chamber 8 for a condensate dripping down the surface of a cooler 9 disposed in the cooling part 5 of the section 3. The condensate is discharged from the annular collecting chamber 8 via a tube 10 connected to a separate tank 11 (Fig. 1) serving as a means of selective collection of the condensate from this section.

The cooler 9 is provided in the form of a cylindrical water jacket (Fig. 1). In an alternative form of the cooler 9, the inside wall 12 thereof can be a corrugated one, the corrugations forming helixes extending upwards so as to make an angle with the horizontal (Fig. 2).

The apparatus incorporates a steam feeding means which is a spraying head 13 arranged to inject the steam into the gas stream 2 in the form of a divergent jet oriented towards the surface of the cooler 9. A ring nozzle issuing the steam as a cone making an angle with the axis of the gas stream or a multi-orifice nozzle also with a conical discharge is a suitable alternative of the spraying head 13. The point is that an adequately dense steam jet reaching the surface of the cooler 9 should be formed. The spraying head 13 is disposed immediately downstream of the throat of the convergent cone 6. The angle of inclination of the steam jets produced by the spraying head 13 is controlled by a mechanism 14, and the flow rate of steam is adjusted by a valve 15. The mechanism 14 and the valve 15 are linked to a central control unit 16 connected whereto are also temperature transducers 17 and 18 disposed upstream and downstream of the convergent cone 6.

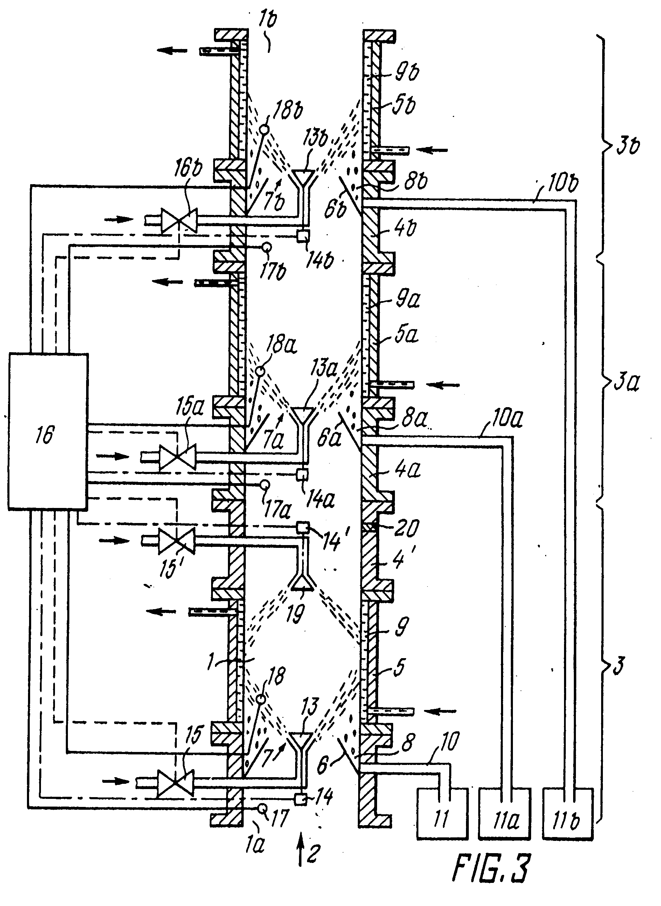

In an alternative form of the apparatus for cleaning a gas stream (Fig. 3), an additional spraying head 19 injecting the steam in a counter-current flow with respect to the gas stream 2 is provided in a section 3, or several sections 3. Being of the same design as the main spraying head 13, the additional spraying head 19 is secured above the intensified section 3 to the supporting part 4 removed wherefrom are the convergent cone 6, the temperature transducers 17 and 18 and an opening for a tube wherein is closed with a plug 20. It will be noted that the orifices of the additional spraying head 19 are oriented downwards.

Each of the sections 3 is a self-contained unit (Fig. 2) which can be mass-produced and easily replaced in case of a repair. the units are interconnected by flanges 21 and bolts (not shown).

The sections are designed so that each unit carries its dead load on its own accord. Therefore, the apparatus can be installed in a smoke stack by either lowering upper units on the lower ones or adding new units at the lower end of the structure. To knock-down the apparatus, the units can be removed from either and thereof. The units can be connected to the systems of steam supply, disposing of the condensate and process control in any known way.
The method of cleaning a gas stream is operant, using the disclosed apparatus, on the lines as follows.

A stream 2 of dust-laden gas or one with a high smoke content, admitted into the tubular vessel 1 through the inlet opening 1A, ascends through the bore of the vessel 1 and the convergent cones 6, 6A, and 6B before leaving through the outlet opening 1B. The velocity of the gas stream increases in the convergent cones 6, 6A and 6B and subsides on leaving them. The steam, admitted into the spraying head 13 through the valve 15, is injected into the gas stream 2 in the form of divergent jets so as to contact the surface of the cooler 9 at angles between 0° and 180°.

For all best results the angle made by the convergent jets of steam with the surface of the cooler 9 should be 35-55°. Also the steam jets should have a velocity and density which are adequate for establishing contact with the surface of the cooler 9 so as to facilitate the inertia-induced motion of the droplets of condensate towards the cooler 9.

Exerting a sucking action on the gas which is being cleaned, the jets of steam intermix therewith to form a gas/steam mixture. A rapidly achieved supersaturation of the gas/steam mixture brings about a nucleation enlargement of aerosol particles, whereby the larger particles,begin to grow in size before the rest of them. Increasing in size, the larger particles are acted upon by steam jets and impinge on the surface of the cooler 9 where the droplets of condensate settle due to inertia. The condensate descends integrally with the captured particles along the surface of the cooler 9 into the annular collecting chamber 8 wherefrom it is disposed of into the tank 11 over the tube 10. The helically corrugated inside surface 12 of the cooler imparts swirling motion to the gas stream which facilitates the inertia-induced settlement of the particles at the surface of the cooler.

The steam/gas mixture cleaned from the larger particles in the section 3 is fed into the next section over a passage between the walls of the cooler 9 and the convergent cone 6 where the mixture cools down. Studies have shown that the temperature of the walls of the cooler 9 must be maintained at a point of steam condensation so that the droplets of condensate stick firmly to the surface of the walls thereof.

The gas/steam mixture fed into the second section 3A is again treated there with the steam jets produced by the spraying head 13A but the level of saturation achieved in this section is higher than that in the first section 3. The steam content of the gas/steam mixture is also increased as the remaining particles diminish in size. The steam pressure is increased by 10-30% at each succeeding stage compared with the preceding one. This all brings about a new nucleation enlargement of aerosol particles, whereby the largest particles among those which are left in the gas stream begin to grow in size before the rest of them. The enlarged particles in their turn impinge on the surface of the cooler 9A of the second stage due to the motive force exerted by the steam jets so that droplets of the second fraction of condensate settle at the cooler wall by virtue of inertia. The condensate with the entrained particles of the second fraction is disposed of into the tank 11A via the annular collecting chamber 8A and the tube 10A.

The steam/gas mixture cleaned from the particles of the second fraction in the second stage of the apparatus is fed into the next section through a passage formed by the walls of the cooler 9A for further treatment by analogy with the two initial sections until a specified cleanness of the gas stream is achieved.

The process is monitored with the aid of the temperature transducers 17, 18, 17A, 18A, 17B and 18B. Their readings provide a basis for controlling the flow rate of steam into each of the spraying heads 13.

When a gas stream with a very high dust or smoke content should be treated, an additional spraying head 19 (Fig. 3) can be provided in one or more sections 3. The additional spraying head 19 injecting the steam into the gas stream 2 in a counter-current flow speeds up the process of supersaturation of the gas/steam mixture and the settlement of enlarged particles in those cases when the flow rate of the steam issuing from the spraying head 13 appears to be insufficient so that a significant number of the particles liable to settle in the first section are carried over into the second one.

The convergent cones 6 serve to reduce the gas pressure around the place of the injection of steam in each section. After that the gas pressure increases. The process of changing the gas pressure during the injection of steam is a adiabatic one. The velocity of the gas stream increases with a decrease in its pressure and decreases when the pressure builds up.

The disclosed method of cleaning a gas stream is illustrated by a few examples.

### Example 1

an apparatus the dust-precipitating dust whereof contained ten sections was used to remove carbon black aerosol, present in an amount of 9.1*10⁻³ kg/m³on the average, from air at a temperature of 40±5°C. The moisture content of the air at the inlet into the apparatus was 0.02 kg/m³and at the outlet therefrom, 0.04 kg/m³. The maximum level of humidification maintained in the apparatus was 0.8 kg/m³. The temperature of cooling water was 16°C, and the velocity of air stream in the apparatus was 0.6 m/s. The angle made by the jets of steam with the axis of the gas/steam mixture was 55° in the first through fourth sections and 35° in the fifth through tenth sections. The size of the bulk of captured particles was 500Å. The dust content of the air at the outlet from the apparatus, as recorded by the instruments, was nil.

### Example 2

A seven-section apparatus was employed for a selective capture of the products of combustion of kerosene under the conditions of air deficiency. The first five sections were operating at the angle of 55° of the steam jets with the axis of gas/steam stream. The particles removed there ranged in size between 50 and 3000 Å. The sixth and seventh sections, where the steam jets made an angle of 35° with the axis of the gas/steam stream, trapped unburnt vapour of kerosene, i.e. aromatic hydrocarbons. The moisture content of the air was 0.018 kg/m³ at the inlet into, and 0.042 kg/m³ at the outlet from the apparatus. The temperature of cooling water was 20°C. Neither dust nor organic matter were recorded to be present in the outflow of air from the apparatus.

### Example 3

A four-section apparatus with an additional spraying head in the first section was employed to remove particles of coal from air. The moisture content of the gas was 0.03 kg/m³ at the inlet and 0.05 kg/m³ at the outlet. The angle made by the steam jets with the axis of the gas/steam stream was 55° in the main spraying heads and 45° in the additional one. All the coal particles were captured in the three first sections so that the outflow of air from the apparatus was free of dust.

### Example 4

An apparatus of the same configuration as in Example 1 was used to detect the presence of smoke from a cigarette in air. When smoke was admitted into the apparatus, the outflow of condensate from the two first sections increased by 5%.

### Industrial Applicability

Industrial gas cleaning equipment is the most promising application of the disclosed invention. It may also be of utility in ventilation systems, air conditioners, incinerators, equipment for the manufacture of carbon black, various powders, abrasives, paints and other materials where handling of dust and aerosols is involved.

## Claims

1. A method of cleaning a gas stream consisting in saturating the dust-laden gas stream or one with a high smoke content with vapour of a liquid in a plurality of serially arranged stages, settling at each stage the particles enlarged due to nucleation in a cooling zone in the form of condensate and disposing of the condensate **characterized** in that steam is injected at each stage in the form of divergent jets making each an angle with the axis of the gas stream.

2. A method as in claim 1, **characterized** in that the jets of steam make an angle of 35-55° with the axis of the gas stream.

3. A method as in claim 1, **characterized** in that the parameters of the jets of steam are chosen at each successive stage with due regard for the size of the particles prevailing in the gas stream at a given stage and the content of steam in the gas stream is increased in proportion with the size of particles

4. A method as in claim 3, **characterized** in that the pressure of steam is increased by 10-30% at each succeeding stage compared with the preceding one.

5. A method as in claims 1 through 4, **characte**rized in that the pressure of gas stream is reduced in the zone of steam injection at each stage and increased downstream subsequently.

6. A method as in claim 5, **characterized** in that the pressure of gas stream is changed adiabatically during the injection of steam.

7. A method as in claim 5, **characterized** in that the velocity of gas stream is increased when the pressure of gas stream is reduced and this velocity is reduced with the increase in the gas pressure.

8. A method as in claims 1 through 7, **characterized** in that the stream of gas/steam mixture is imparted a swirling motion in a plane concentric with the axis of the stream.

9. A method as in claims 1 through 8, **characterized** in that the condensate is disposed of at each stage separately.

10. An apparatus for cleaning a gas stream comprising a tubular vessel, with an inlet opening admitted wherethrough is the dust-laden gas stream or one with a high smoke content contained wherein is a plurality of serially arranged nucleation sections each whereof is provided with a convergent cone, a means of injecting steam , a cooler and an annular collecting chamber for condensate and an outlet opening escaping wherethrough is filtered gas, **characterized** in that the means of injecting steam in each section consists of a spraying head issuing jets of steam which form a cone and are directed towards the cooler provided in the form of a jacket disposed in a coaxial position in relation to the vessel.

11. An apparatus as in claim 10, **characterized** in that the spraying head is provided in the form of a ring nozzle disposed in the throat of the convergent cone of the appropriate section.

12. An apparatus as in claim 11, **characterized** in that the spraying head is provided in the form of a multi-spray atomizer disposed in the throat of the convergent cone of the appropriate section.

13. An apparatus as in any of claims 10 through 12, **characterized** in that at least one of the sections thereof is fitted with an additional spraying head which is identical with the main spraying head and is disposed downstream thereof so as to inject the steam in a counter-current flow in relation to the gas stream.

14. An apparatus as in claim 10, **characterized** in that the annular collecting chamber at each stage is connected to a separate tank for collecting the condensate.

15. An apparatus as in claim 10, **characterized** in that the inside surface of each cooler is a helically corrugated one.

16. An apparatus as in any of claims 10 through 15, **characterized** in that each of the nucleation sections is of the modular design and is provided with flanges at the end faces by means of which the sections are joined to each other.
